# FASCICULE DE BREVET EUROPEEN

(11) **EP 1 310 656 B1**
(45) Date de publication et mention de la délivrance du brevet: **19.07.2006**
(21) Numéro de dépôt: 02292542.4
(22) Date de dépôt: 15.10.2002
(51) Int. Cl.: F02D 41/40, F01N 3/023

(54) **Système d'aide à la régénération de moyens de dépollution intégrés dans une ligne d'échappement d'un moteur de véhicule automobile**
Vorrichtung zur Regenerierung eines in eine Abgasanlage einer Brennkraftmaschine eines Kraftfahrzeugs integrierten Abgasbehandlungssystems
System for assisting the regeneration of an exhaust gas purifying system comprised in the exhaust pipe of a vehicle engine

(30) Priorité: 13.11.2001 FR 0114673
(43) Date de publication de la demande: 14.05.2003
(73) Titulaire: Peugeot Citroen Automobiles SA, 92200 Neuilly sur Seine (FR)
(72) Inventeur: Colignon, Christophe, 92300 Levallois-Perret (FR); Le Tallec, Patrice, 78500 Sartrouville (FR)
(74) Mandataire: Habasque, Etienne J. Jean-François

(56) Documents cités:
- EP-A- 0 902 172
- FR-A- 2 774 428
- US-A- 4 509 327
- US-A- 5 826 425

## Description

La présente invention concerne un système d'aide à la régénération de moyens de dépollution intégrés dans une ligne d'échappement d'un moteur de véhicule automobile.

On assiste déjà depuis plusieurs années à une intégration croissante de moyens de dépollution dans les lignes d'échappement des moteurs de véhicules automobiles.

Ainsi par exemple, des filtres à particules ou des pièges à Nox sont intégrés dans ces lignes d'échappement pour réduire le niveau des émissions polluantes dans l'environnement.

Le principe du filtre à particules consiste à piéger les particules émises dans les gaz d'échappement afin de les bloquer sur le filtre.

Cependant, il est nécessaire d'assurer une régénération périodique de ce filtre.

Cette régénération est obtenue par combustion des particules piégées.

Pour obtenir une telle combustion, il est nécessaire de réunir un certain nombre de conditions.

Ainsi, la température des particules doit être augmentée jusqu'à une valeur prédéterminée dite d'amorçage de la combustion, cette augmentation de température étant provoquée notamment par une augmentation de la température des gaz d'échappement en sortie du moteur.

Cependant, les gaz doivent également comporter une quantité suffisante d'oxygène pour assurer le bon déroulement de cette régénération et éventuellement une certaine quantité d'hydrocarbures imbrûlés, par exemple dans le cas où le filtre à particules est catalysé ou associé à un catalyseur distinct.

On a alors développé dans l'état de la technique, des systèmes d'alimentation spécifiques en carburant des moteurs.

Ces systèmes d'alimentation sont en fait adaptés pour assurer des injections multiples de carburant dans les cylindres du moteur. Ces injections multiples comprennent par exemple une pré-injection, une injection principale et une post-injection de carburant pendant la phase de détente du cylindre correspondant.

Le problème lié à l'utilisation de ce type de systèmes réside dans le fait que les gaz d'échappement ont une faible teneur en oxygène, ce qui est défavorable à la combustion des particules, c'est-à-dire au déclenchement et à la propagation de cette combustion.

Le but de l'invention est donc de résoudre ces problèmes.

A cet effet, l'invention a pour objet un système d'aide à la régénération de moyens de dépollution intégrés dans une ligne d'échappement d'un moteur de véhicule automobile, dans lequel le moteur est associé à des moyens d'alimentation commune des cylindres de celui-ci, adaptés pour, lors de la régénération, injecter du carburant dans chaque cylindre sous la forme d'au moins une injection principale et d'au moins une post-injection pendant la phase de détente du cylindre, caractérisé en ce que les moyens d'alimentation sont adaptés pour couper au moins l'injection principale d'au moins l'un des cylindres afin d'augmenter la teneur en oxygène des gaz d'échappement et optimiser la régénération des moyens de dépollution.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure générale d'un système d'aide selon l'invention ; et
- la Fig.2 illustre des injections de carburant dans les cylindres d'un moteur.

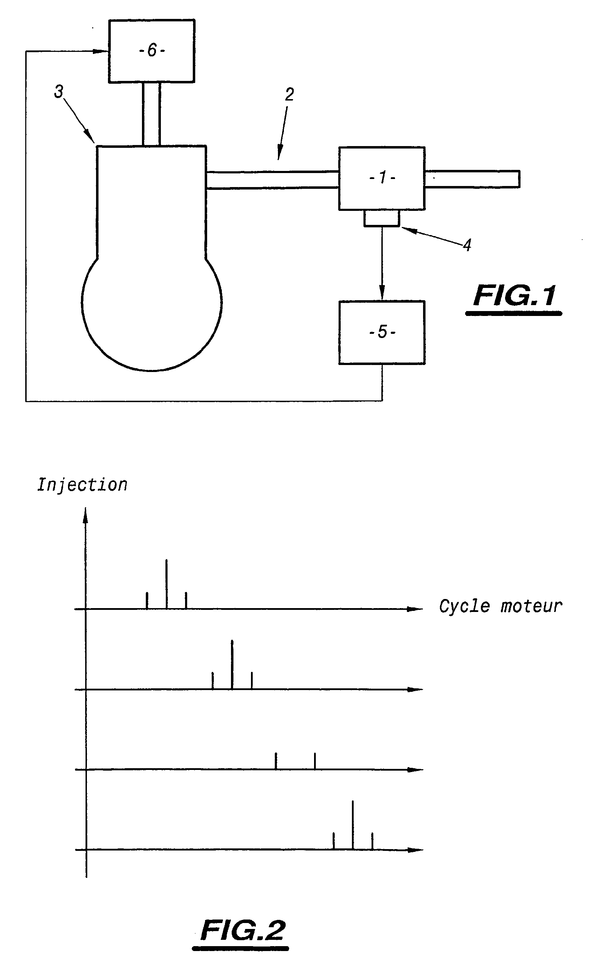

On a en effet représenté sur la figure 1, un système d'aide à la régénération de moyens de dépollution désignés par la référence générale 1, intégrés dans une ligne d'échappement désignée par la référence générale 2, d'un moteur 3 de véhicule automobile.

Les moyens de dépollution sont associés à des moyens de surveillance 4 de l'état de ceux-ci raccordés à des moyens de traitement d'informations constitués par tout calculateur approprié, 5, de pilotage de moyens d'alimentation 6 en carburant des cylindres de ce moteur.

Comme cela est connu, lors de la régénération du filtre, ces moyens d'alimentation sont adaptés pour assurer l'injection de carburant dans chaque cylindre, sous la forme d'au moins une injection principale et d'au moins une post-injection pendant la phase de détente du cylindre.

Une pré-injection peut également être envisagée.

Comme cela est connu également, ces injections multiples permettent d'augmenter la température des gaz d'échappement en sortie du moteur et donc d'augmenter la température des particules piégées dans les moyens de dépollution afin de déclencher leur combustion, mais également de produire des hydrocarbures imbrûlés dans ces gaz d'échappement afin de favoriser cette régénération.

Selon l'invention, les moyens d'alimentation sont adaptés pour couper au moins l'injection principale d'au moins l'un des cylindres afin d'augmenter la teneur en oxygène des gaz d'échappement et optimiser la régénération des moyens de dépollution.

Ceci est illustré sur la figure 2, où l'on constate que l'injection principale de carburant dans le troisième cylindre a été coupée.

Ceci permet alors de transformer le cylindre pour lequel au moins l'injection principale a été coupée, en pompe à oxygène permettant d'enrichir les gaz d'échappement en comburant pour assurer une combustion rapide et complète, c'est-à-dire un déclenchement et une propagation de cette combustion, des particules piégées dans les moyens de dépollution.

De façon connue également, dans le cas où le moteur est associé à un turbocompresseur, l'énergie récupérée par la turbine est modifiée et il convient alors d'appliquer une consigne spécifique de suralimentation.

Pour les autres cylindres, des injections multiples sont utilisées de façon classique et peuvent être associées à une augmentation de la richesse du mélange air-carburant (en réduisant le débit d'air par vannage, en délivrant le gaz par une EGR ou en utilisant tout autre artifice permis par exemple par l'utilisation de soupapes électromagnétiques).

En coupant l'injection principale d'un ou de plusieurs cylindres du moteur, tout en maintenant un couple constant délivré par le moteur, on augmente la charge sur les cylindres fonctionnant normalement, ce qui permet d'augmenter le niveau thermique des gaz d'échappement.

Par ailleurs, la coupure de l'injection principale peut intervenir sur un cylindre différent à chaque cycle moteur, les cylindres consécutifs étant par exemple coupés les uns à la suite des autres, par une permutation circulaire afin de les couper à tour de rôle.

Ceci permet d'homogénéiser le fonctionnement du moteur en maintenant un niveau thermique minimum au niveau du collecteur d'échappement.

En effet, un cylindre qui ne fait que comprimer de l'air frais, apporte de l'oxygène froid par rapport aux gaz d'échappement venant des autres cylindres, ce qui abaisse la température du mélange air/gaz d'échappement.

En réalisant des coupures des différents cylindres les uns à la suite des autres, l'abaissement de température au niveau du collecteur d'échappement lié à ce pompage d'air est compensé par le niveau thermique du ou des cycles suivants normaux, de sorte que la température moyenne des gaz en sortie n'est alors que peu influencée par la coupure des cylindres.

Ainsi par exemple, pour un moteur en V, on peut éventuellement couper un cylindre sur une rangée de cylindres tout ne coupant jamais le même deux cycles moteur consécutifs.

On conçoit alors qu'un tel système permet de favoriser la combustion des particules en enrichissant en oxygène les gaz d'échappement traversant le support de filtrage, tout en engendrant un niveau thermique élevé des gaz d'échappement.

Un tel système peut par exemple être utilisé pour tout type de moteur thermique, essence ou Diesel, suralimenté ou non.

Il peut être utilisé notamment pour la régénération d'un filtre à particules catalysé ou non, d'un piège à Nox ou d'un système de dépollution comportant à la fois un filtre à particules, catalysé ou non, associé à un piège à Nox.

## Revendications

1. Système d'aide à la régénération de moyens de dépollution (1) intégrés dans une ligne d'échappement (2) d'un moteur (3) de véhicule automobile, dans lequel le moteur est associé à des moyens (6) d'alimentation commune des cylindres de celui-ci, adaptés pour, lors de la régénération, injecter du carburant dans chaque cylindre sous la forme d'au moins une injection principale et d'au moins une post-injection pendant la phase de détente du cylindre, **caractérisé en ce que** les moyens (6) d'alimentation sont adaptés pour couper au moins l'injection principale d'au moins l'un des cylindres afin d'augmenter la teneur en oxygène des gaz d'échappement et optimiser la régénération des moyens de dépollution.

2. Système selon la revendication 1, **caractérisé en ce que** les moyens d'alimentation (6) sont adaptés pour couper l'injection principale dans un cylindre différent à chaque cycle moteur.

3. Système selon la revendication 2, **caractérisé en ce que** les moyens d'alimentation (6) sont adaptés pour couper l'injection principale des cylindres consécutifs du moteur les uns à la suite des autres.

4. Système selon l'une quelconque des revendications précédentes, **caractérisé en ce que** les moyens de dépollution (1) comprennent un filtre à particules.

5. Système selon la revendication 4, **caractérisé en ce que** le filtre à particules est un filtre à particules catalysé.

6. Système selon l'une quelconque des revendications 1 à 3, **caractérisé en ce que** les moyens de dépollution (1) comprennent un piège à Nox.

7. Système selon l'une quelconque des revendications 1 à 3, **caractérisé en ce que** les moyens de dépollution comprennent un filtre à particules, catalysé ou non, associé à un piège à Nox.

8. Système selon l'une quelconque des revendications précédentes, **caractérisé en ce que** les moyens d'alimentation (6) sont adaptés pour assurer une pré-injection de carburant dans les cylindres du moteur avant l'injection principale.

## Claims

1. System for aiding the regeneration of pollution-control means (1) that are integrated in an exhaust line (2) of an engine (3) of a motor vehicle, in which the engine is associated with means (6) for the common supply of the cylinders thereof, which means are in a form suitable for injecting fuel, during regeneration, into each cylinder in the form of at least one principal injection and at least one post-injection during the expansion phase of the cylinder, **characterised in that** the supply means (6) are in a form suitable for cutting at least the principal injection of at least one of the cylinders in order to increase the oxygen content of the exhaust gases and to optimise the regeneration of the pollution-control means.

2. System according to claim 1, **characterised in that** the supply means (6) are in a form suitable for cutting the principal injection into a different cylinder at each engine cycle.

3. System according to claim 2, **characterised in that** the supply means (6) are in a form suitable for cutting the principal injection of the consecutive cylinders of the engine one after another.

4. System according to any one of the preceding claims, **characterised in that** the pollution-control means (1) comprise a particulate filter.

5. System according to claim 4, **characterised in that** the particulate filter is a catalysed particulate filter.

6. System according to any one of claims 1 to 3, **characterised in that** the pollution-control means (1) comprise a Nox trap.

7. System according to any one of claims 1 to 3, **characterised in that** the pollution-control means comprise a catalysed or non-catalysed particulate filter associated with a Nox trap.

8. System according to any one of the preceding claims, **characterised in that** the supply means (6) are in a form suitable for providing a pre-injection of fuel into the engine cylinders before the principal injection.

## Patentansprüche

1. System für die Unterstützung der Regeneration von in eine Abgasleitung (2) eines Kraftfahrzeugmotors (3) integrierten Reinigungsmitteln (1), bei dem dem Motor Mittel (6) für die gemeinsame Versorgung seiner Zylinder zugeordnet sind, die so beschaffen sind, dass sie bei der Regeneration Kraftstoff in jeden Zylinder in Form wenigstens einer Haupteinspritzung und wenigstens einer Nacheinspritzung während der Expansionsphase des Zylinders einleiten, **dadurch gekennzeichnet, dass** die Versorgungsmittel (6) so beschaffen sind, dass sie wenigstens die Haupteinspritzung in wenigstens einen der Zylinder unterbrechen, um den Sauerstoffgehalt der Abgase zu erhöhen und um die Regeneration der Reinigungsmittel zu optimieren.

2. System nach Anspruch 1, **dadurch gekennzeichnet, dass** die Versorgungsmittel (6) so beschaffen sind, dass sie die Haupteinspritzung in einen in jedem Motortakt unterschiedlichen Zylinder unterbrechen.

3. System nach Anspruch 2, **dadurch gekennzeichnet, dass** die Versorgungsmittel (6) so beschaffen sind, dass sie die Haupteinspritzung aufeinander folgender Zylinder des Motors nacheinander unterbrechen.

4. System nach einem der vorhergehenden Ansprüche, **dadurch gekennzeichnet, dass** die Reinigungsmittel (1) einen Partikelfilter umfassen.

5. System nach Anspruch 4, **dadurch gekennzeichnet, dass** der Partikelfilter ein katalysierter Partikelfilter ist.

6. System nach einem der Ansprüche 1 bis 3, **dadurch gekennzeichnet, dass** die Reinigungsmittel (1) eine NOₓ-Falle umfassen.

7. System nach einem der Ansprüche 1 bis 3, **dadurch gekennzeichnet, dass** die Reinigungsmittel einen katalysierten oder nicht katalysierten Partikelfilter, dem eine NOₓ-Falle zugeordnet ist, umfassen.

8. System nach einem der vorhergehenden Ansprüche, **dadurch gekennzeichnet, dass** die Versorgungsmittel (6) so beschaffen sind, dass sie eine Voreinspritzung von Kraftstoff in die Zylinder des Motors vor der Haupteinspritzung sicherstellen.
